# EUROPEAN PATENT APPLICATION

(11) **EP 1 643 089 A1**
(43) Date of publication of application: **05.04.2006**
(21) Application number: 04745511.8
(22) Date of filing: 02.06.2004
(51) Int. Cl.: F01N 3/02

(54) **EXHAUST GAS-PURIFYING DEVICE**

(30) Priority: 04.06.2003 JP 2003159333
(71) Applicant: Hino Motors, Ltd., Hino-shi, Tokyo 191-8660 (JP)
(72) Inventor: TAKENAKA, Yoshihide,c/o Hino Motors, Ltd., Hino-shi, Tokyo 191-8660 (JP); MACHIDA, Koichi, c/o Hino Motors, Ltd., Hino-shi, Tokyo 191-8660 (JP)
(74) Representative: Köhler, Walter
(86) International application number: PCT/JP2004/007612
(87) International publication number: WO 2004/109071

(57) **Abstract**

An exhaust emission control device with less electricity consumption comprises a cylindrical outer electrode 7 extending in a direction of flow of exhaust G, a plurality of inner electrodes 5 and 6 constituted by electrically conductive filters capable of capturing particulates and aligned in the direction of flow of the exhaust G within an outer electrode 7, captured particulate amount estimating means 2 for estimating captured particulate amounts of the respective inner electrodes 5 and 6 and an electric discharge controller 3 for supplying electric power for generation of electric discharge to the outer electrode 7 and any of the inner electrodes 5 and 6 on the basis of calculated values of the estimating means 2.

## Description

### Technical Field

The present invention relates to an exhaust emission control device.

### Background Art

Particulates or particulate matter in exhaust (burned gas of diesel oil) from a diesel engine is mainly constituted by carbonic soot and a soluble organic fraction of high-boiling hydrocarbon and contains a trace of sulfate (misty sulfuric acid fraction).

In order to suppress the particulates from being diffused into atmosphere, conventionally a particulate filter is incorporated in an engine exhaust system to capture the particulates.

An example of such particulate filter comprises a honeycomb core made of ceramics such as cordierite and having a number of passages compartmentalized by porous thin walls, exhaust gas from an engine flowing through the passages.

In the particulate filter, alternate ones of the parallel passages have plugged one ends so as to guide the exhaust gas to unplugged one ends of the gas passages adjacent thereto; the passages through which the exhaust gas flows have the plugged other ends so as to connect unplugged other ends of the gas passages adjacent thereto to a muffler.

Thus, particulates entrained in the exhaust gas are captured by the porous thin walls and only the exhaust gas passing through the walls is discharged to the atmosphere.

The particulates attached to the thin walls will spontaneously ignite to be oxidized when an engine operational status is shifted to an area with exhaust gas temperature increased.

However, for example, in a shuttle-bus running mainly on city roads with generally lower running speeds, there is few chance to continue an engine operational status capable of obtaining exhaust temperature suited for oxidation treatment of the particulates. As a result, a captured particulate amount will exceed an oxidized amount, leading to clogging of the pore thin walls.

Thus, recently, a plasma assisted exhaust emission control device (gas treatment reactor vessel) has been proposed which can oxidize particulates even if exhaust temperature is low (see, for example, Reference 1).

In this exhaust emission control device, outer and inner electrodes made of drilled stainless cylinders are arranged coaxially in a chamber; a gap between the electrodes is charged with electric conductor in the form of pellets so as to allow the exhaust gas to pass. The exhaust gas from the engine is guided to a gap between the chamber and the outer electrode.

Thus, the particulates in the exhaust supplied from between the chamber and the outer electrode to the pellet charged layer are attached to the pellets, only the exhaust passing through the pellet charged layer being discharged to the atmosphere.

Moreover, higher voltage is applied to the inner and outer electrodes to generate discharge plasma and excite the exhaust gas, so that unburned hydrocarbon, oxygen and nitrogen monoxide are activated into oxygen-containing hydrocarbon, ozone and nitrogen dioxide, respectively.

Thus, even with lower exhaust gas temperature, the particulates attached to the pellets will spontaneously ignite to be oxidized.
[Reference 1] JP 2002-501813A

### Summary of The Invention

### [Problems to be Solved by the Invention]

However, in the plasma assisted exhaust emission control device as mentioned above, the discharge plasma is generated all over the inner and outer electrodes although quantitative distribution of the captured particulates is not always uniform in a direction of flow of the exhaust, leading to too much electricity consumption.

The invention was made in view of the above and has its object to provide an exhaust emission control device with less electricity consumption.

### [Means or Measure for Solving the Problems]

In order to attain the above object, according to a first aspect of the invention, provided are an integral electrode extending in a direction of flow of exhaust, a plurality of divided electrodes constituted by electrically conductive filters capable of capturing particulates and aligned in the direction of flow of the exhaust and an electric discharge controller for supplying electric power for generating electric discharge to the integral electrode and to any of the divided electrodes. Further provided is captured amount estimating means to estimate particulate amounts captured by the respective divided electrodes. On the basis of calculated values of the estimating means, the integral electrode and any of the divided electrodes may be supplied with electric power for generation of electric discharge.

According to a second aspect of the invention, provided are an integral electrode extending in a direction of flow of exhaust gas, a plurality of divided electrodes aligned in the direction of flow of exhaust gas, a filter between both of the electrodes and capable of capturing particulates and an electric discharge controller for supplying electric power for generation of electric discharge to the integral electrode and to any of the divided electrodes. Further provided is captured amount estimating means to estimate distribution of captured particulate amount on the filter. On the basis of calculated amounts of the estimating means, the integral electrode and any of the divided electrodes may be supplied with electric power for generation of electric discharge.

In the first aspect of the invention, the discharge controller supplies the electric power for generation of electric discharge to the integral electrode and to the particular ones of the divided electrodes with excessive captured particulate amounts so as to oxidize the particulates. The captured particulate amounts of the respective divided electrodes may be calculated by the estimating means.

In the second aspect of the invention, the discharge controller supplies the electric power for generation of electric discharge to the integral electrode and to the particular ones of the divided electrodes which correspond to filter portions each with an excessive captured particulate amount so as to oxidize the particulates. Distribution of the captured particulate amount on the filter may be calculated by the estimating means.

### [Effects of the Invention]

According to an exhaust emission control device of the invention, the following various excellent meritorious effects are obtained.

(1) In the first aspect of the invention, the discharge controller supplies the electric power for generation of electric discharge to the integral electrode and to the particular ones of the divided electrodes each with excessively captured particulate amount, so that power consumption may be decreased.

(2) The captured particulate amounts by the respective divided electrodes may be calculated by the estimating means.

(3) In the second aspect of the invention, the discharge controller supplies the electric power for generation of electric discharge to the integral electrode and particular ones of the divided electrodes corresponding to filter portions each with excessively captured particulate amount, so that power consumption may be decreased.

(4) The distribution of the captured particulate amount of the filter may be calculated by the estimating means.

### Best Mode for Carrying Out the Invention

Embodiments of the invention will be described with reference to the drawings.

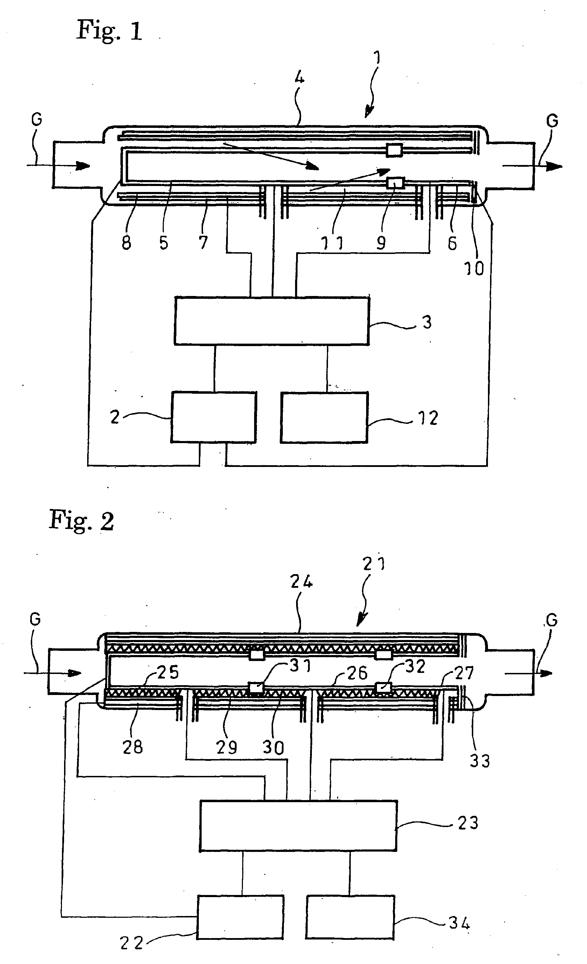

Fig. 1 shows a first embodiment of an exhaust emission control device according to the invention which comprises a capturing cell 1, captured amount estimating means 2 and an electric discharge controller 3.

The cell 1 comprises a housing 4 incorporated in a flow passage of exhaust G to be purified, a plurality of hollow inner electrodes 5 and 6 (divided electrodes) constituted by electrically conductive filters capable of capturing particulates and aligned coaxially in a direction of flow of the exhaust G within the housing 4, a cylindrical outer electrode (integral electrode) 7 arranged within the housing 4 so as to peripherally surround the inner electrodes 5 and 6 and an electric conductor 8 made of for example ceramics to cover an inner surface of the outer electrode 7.

Moreover, a particulate filter, using for example cordierite, is incorporated separately from the capturing cell 1 in the flow passage of the exhaust G.

The electrically conductive filter may be fibrous metal laminated and sintered into integrity, sintered body of metallic powder, fine metallic mesh laminated and sintered into integrity or metallic powder carried through sintering by fine metallic mesh; any of them may capture the particulates while ensuring passing of the gas.

The inner electrode 5 has closed and opened upstream and downstream ends, respectively, in the direction of flow of the exhaust G while the inner electrode 6 has opened opposite ends.

The inner electrodes 5 and 6 are connected together through an annular insulant 9. To downstream ends of the inner and outer electrodes 6 and 7 in the direction of flow of the exhaust G, an annular insulant 10 contacts all over peripheries of the ends.

The insulant 9 not only retains electric insulation between the inner electrodes 5 and 6, but also sufficiently separates the electrodes 5 and 6 so as not to cause electric discharge between the electrodes 5 and 6.

Thus, the exhaust G from the engine (not shown) flows into a gap 11 between outer surfaces of the inner electrodes 5 and 6 and an inner surface of the electric conductor 8 in the capturing cell 1, passes through the inner electrodes 5 and 6 from outward to inward and flows out to a muffler (not shown) through inner spaces of the inner electrodes 5 and 6; the particulates are captured by the inner electrodes 5 and 6 which are the conductive filters.

The estimating means 2 is constructed such that electric power for searching is applied to the inner electrodes 5 and 6 to measure electric characteristics (resistance, current and voltage values) of these bodies to be tested and that, on the basis of correlation between parametric electric characteristics and preliminarily obtained captured particulate amounts of the respective electrodes 5 and 6 through actual measurement, captured particulate amounts of the respective inner electrodes 5 and 6 at that point of time are calculated so as to output a signal.

A main component of the particulates is carbon (electric conductor). Thus, the more the captured particulate amount on the inner electrode 5 is increased, the more the resistance value as judgment factor for the captured amount is lowered, the more the current value is increased and the more remarkably the voltage value is lowered.

Thus, the captured particulate amounts of the respective inner electrodes 5 and 6 may be estimated by measuring electric characteristic values on the respective inner electrodes 5 and 6 at appropriate intervals when no electric discharge occurs.

Connected to the electric discharge controller 3 are the above-mentioned estimating means 2 as well as an in-vehicle power supply 12 such as alternator.

The discharge controller 3 is constructed such that, when captured particulate amount of the inner electrode 5 or 6 at that point of time obtained by the estimating means 2 exceeds a predetermined value, the electric power is applied to the outer electrode 7 and the very one of the inner electrodes 5 and 6 with excess captured particulate amount so as to generate discharge plasma.

Thus, discharge plasma is generated only between the outer electrode 7 and any of the inner electrodes 5 and 6 with captured particulate amount. The particles may be oxidized through for example ozone and oxygen radical.

Fig. 2 shows a second embodiment of an exhaust emission control device according to the invention which comprises a capturing cell 21, captured amount estimating means 22 and an electric discharge controller 23.

The cell 21 comprises a housing 24 incorporated in a flow passage of an exhaust G to be purified, a plurality of hollow inner electrodes (divided electrode) 25-27 aligned coaxially in the direction of flow of the exhaust G within the housing 24, a cylindrical outer electrode (integral electrode) 28 arranged in the housing 24 so as to circumferentially surround the inner electrodes 25-27, an electric conductor 29 made of for example ceramics to cover an inner surface of the outer electrode 28 and a particulate-capturing filter 30 between outer surfaces of the inner electrodes 25-27 and the electric conductor 29.

The inner electrodes 25-27 are made of rigid and porous material such that they allow the exhaust G to pass therethrough form outward to inward and they can retain the filter 30.

The filter 30 may be made of, for example, ceramics pellet or cordierite honeycomb.

The inner electrode 25 is closed and opened upstream and downstream ends, respectively, in the direction of flow of the exhaust G while each of the inner electrodes 26 and 27 has opened opposite ends.

The inner electrodes 25 and 26 are connected together through an annular insulant 31. The inner electrodes 26 and 27 are connected together through an annular insulant 32.

To downstream ends of the inner and outer electrodes 27 and 28 in the direction of flow of the exhaust G, an annular insulant 33 contacts all over peripheries of the ends of the electrodes 27 and 28.

The respective insulants 31 and 32 not only retain electric insulation between the inner electrodes 25-27 to each other, but also sufficiently separate the electrodes 25-27 so as not to cause electric discharge between the electrodes 25 and 26 and between the electrodes 26 and 27, respectively.

Thus, the exhaust G from the engine flows through the filter 30 between the outer surfaces of the inner electrodes 25-27 in the capturing cell 21 and the inner surface of the electric conductor 29, passes through the inner electrodes 25-27 from outward to inward and flows out through these inner spaces of the inner electrodes 25-27 into a muffler (not shown) downstream of the capturing cell 21, the particulates being captured by the filter 30.

The estimating means 22 is constructed such that it detects load information such as engine revolution speed or inner pressure in the exhaust passage and, on the basis of a correlation between the captured particulate amount of the filter 30 obtained by actual measurement and the load information as parameter, distribution of captured particulate amount on the filter 30 is calculated to output a signal.

Connected to the discharge controller 23 are the above-mentioned estimating means 22 as well as an in-vehicle power supply 34 such as alternator.

This discharge controller 23 is constructed such that, on the basis of the above-mentioned data on distribution of the captured particulate amount, electric force is supplied to the outer electrode 28 and to any of the inner electrodes 25-27 corresponding to the portions of the filter 30 with excessive captured particulate amounts to generate discharge plasma.

Thus, discharge plasma is generated only between the particular ones of the inner electrodes 25-27 and the outer electrode 28. The particulates can be oxidized by ozone, oxygen radical or the like.

It is to be understood that an exhaust emission control device of the present invention is not limited to the above-mentioned embodiments and that various changes and modifications may be made without diverting the gist of the invention. For example, though the electrodes for generation of electric discharge plasma have been disclosed and illustrated in the embodiments as cylinders, other shapes such as opposed flat plates or lattices may be also employed. Proportions in length of the divided electrodes may be suitably changed.

### Industrial Applicability

An exhaust emission control device according to the invention may be applicable to various types of vehicles.

### Brief Description of Drawings

[Fig. 1] Conceptual diagram showing a first embodiment of an exhaust emission control device according to the invention.
[Fig. 2] Conceptual diagram showing a second embodiment of an exhaust emission control device according to the invention.

### Explanation of the Reference Numerals

- 2: captured amount estimating means
- 3: discharge controller
- 5: inner electrode (divided electrode)
- 6: inner electrode (divided electrode)
- 7: outer electrode (integral electrode)
- 22: captured amount estimating means
- 23: electric discharge controller
- 25: inner electrode (divided electrode)
- 26: inner electrode (divided electrode)
- 27: inner electrode (divided electrode)
- 28: outer electrode (integral electrode)
- 30: filter
- G: exhaust gas

## Claims

1. An exhaust emission control device comprising an integral electrode (7) extending in a direction of flow of exhaust gas G, a plurality of divided electrodes (5,6) constituted by electrically conductive filters (5,6) capable of capturing particulates and aligned in the direction of flow of the exhaust G and an electric discharge controller (3) for supplying electric power for generation of electric discharge to the integral electrode (7) and to any of the divided electrodes (5,6).

2. The exhaust emission control device as claimed in claim 1 further comprising captured amount estimating means (2) for estimating particulate amounts captured by the respective divided electrodes (5,6), the integral electrode (7) and any of the divided electrodes (5,6) being supplied with electric power for generation of electric discharge on the basis of calculated values of the estimating means (2).

3. An exhaust emission control device comprising an integral electrode (28) extending in a direction of flow of exhaust gas G, a plurality of divided electrodes (25 - 27) aligned in the direction of flow of the exhaust G, a filter (30) between both of the electrodes (28, 25 -27) and capable of capturing particulates and an electric discharge controller (23) for supplying electric power for generation of electric discharge to the integral electrode (30) and any of the divided electrodes (25-27).

4. The exhaust emission control device according to claim (3) further comprising captured amount estimating means (22) for estimating distribution of a captured particulate amount on the filter (30), the integral electrode (28) and any of the divided electrodes (25 - 27) being supplied with electric power for generation of electric discharge on the basis of calculated amounts of the estimating means (22).
